# EUROPÄISCHE PATENTSCHRIFT

(11) **EP 2 618 980 B1**
(45) Veröffentlichungstag und Bekanntmachung des Hinweises auf die Patenterteilung: **17.12.2014**
(21) Anmeldenummer: 11749205.8
(22) Anmeldetag: 31.08.2011
(51) Int. Cl.: C08G 18/30, C08G 101/00, B29C 44/58, B29C 44/12, C08G 18/76

(54) **FIXIERUNG VON VAKUUMISOLATIONSPANEELEN IN KÜHLVORRICHTUNGEN**
FIXATION OF VACUUM INSULATION PANELS IN COOLING DEVICES
FIXATION DE PANNEAUX D'ISOLATION SOUS VIDE DANS DES SYSTÈMES DE RÉFRIGÉRATION

(30) Priorität: 22.09.2010 EP 10178194
(43) Veröffentlichungstag der Anmeldung: 31.07.2013
(73) Patentinhaber: BASF SE, 67056 Ludwigshafen (DE)
(72) Erfinder: ELBING, Mark, 28215 Bremen (DE); SCHÜTTE, Markus, 49080 Osnabrück (DE); KROGMANN, Jörg, 49393 Lohne (DE); KLASSEN, Johann, 32351 Stemwede-Oppendorf (DE); BOOS, Jürgen, 48531 Nordhorn (DE)
(86) Internationale Anmeldenummer: PCT/EP2011/065009
(87) Internationale Veröffentlichungsnummer: WO 2012/038215

(56) Entgegenhaltungen:
- DE-A1-102008 026 528
- DE-U1- 29 613 093
- US-A1- 2008 280 120

## Beschreibung

Die Erfindung betrifft die Verwendung eines spezifischen Polyurethan (PUR)-Schaumreaktionssystems zur flächigen Fixierung von Vakuumisolationspaneelen (VIPs) an einer Wand einer Kühlvorrichtung sowie ein Verfahren zur Herstellung von Verbundkörpern, die eine Wand einer Kühlvorrichtung, eine PUR-Schaumschicht und mindestens ein VIP enthalten.

Vakuumisolationseinheiten, auch als Vakuumisolationspaneele bezeichnet, werden in zunehmendem Maße zur Wärmeisolation eingesetzt. Sie finden unter anderem Anwendung für Kühlgerätegehäuse, Behälter für Kühlfahrzeuge, Kühlboxen, Kühlzellen oder Fernwärmerohre. Aufgrund ihrer geringeren Wärmeleitfähigkeit bieten sie Vorteile gegenüber üblichen Dämmstoffen. So liegt das Energieeinsparpotential gegenüber geschlossenzelligen Polyurethan-Hartschaumstoffen üblicherweise bei etwa 20 bis 30%.

Solche Vakuumisolationseinheiten bestehen in der Regel aus einem wärmeisolierenden Kernmaterial, beispielsweise offenzelligem Polyurethan (PUR)-Hartschaum, offenzelligem extrudierten Polystyrolschaum, Kieselgelen, Glasfasern, Kunststoffschüttungen, gepresstem Mahlgut aus PUR-Hartschaum bzw. -Halbhartschaum, Perlite, welches in eine gasdichte Folie verpackt, evakuiert und luftdicht eingeschweißt wird. Das Vakuum sollte kleiner 100 mbar sein. Bei diesem Vakuum kann eine Wärmeleitfähigkeit der Paneele je nach Struktur und Porengröße des Kernmaterials von unter 10 mW/mK erreicht werden.

Zur Wärmeisolierung werden die Vakuumisolationspaneele üblicherweise in das zu isolierende Bauteil eingebracht und dort fixiert. Die oben beschriebenen Bauteile zur Wärmeisolierung bestehen zumeist aus zwei kompakten Schichten, vorzugsweise Metallblechen oder Kunststoffen, wie Polystyrol.

Bei der Herstellung von Kühlschränken wird das flüssige PUR-Hartschaumreaktionsgemisch in einen Hohlraum injiziert, der im allgemeinen aus Metallaußenwänden, einer Rückwand aus Kunststoff oder eines aus Pappe basierenden Mehrschichtverbundmaterials sowie einem Kunststoffinnengehäuse (Inliner) aufgebaut ist. Die VIPs müssen vor Einbringen des Reaktionsgemischs fixiert werden, um eine unkontrollierte Bewegung der Elemente während der Schaumausbildung im Hohlraum zu verhindern. Eine gängige Methode zur Fixierung stellt die Verwendung von doppelseitigem Klebeband dar, wobei die VIPs entweder an die Innenseite der Außenbleche (JP 2005-076966) oder auch an den Inliner geklebt werden (EP-A-0434225). Wenn das VIP an der Innenseite der Metallaußenwände fixiert worden ist, wird es während des Ausschäumens des Hohlraumes vom reagierenden PUR-Hartschaumreaktionsgemisch umflossen. Durch die entstehende Reaktionswärme des PUR-Hartschaumreaktionsgemischs kommt es zu einer starken Erwärmung des Schaumstoffes im Gerät. Bei der anschließenden Abkühlung kommt es aufgrund unterschiedlicher Ausdehnungskoeffizienten von VIP und PUR-Hartschaumstoff zu einer ungewollten Verformung des Gehäuses. Die resultierende unterschiedliche Verformung wird vor allem an den Seitenwänden wahrnehmbar. Dies ist insbesondere bei der Verwendung von Edelstahloberflächen und der Verwendung eines doppelseitigen Klebebands für die VIP Fixierung der Fall, da hier aufgrund der glänzenden Oberfläche Defekte besonders gut erkennbar sind und aus Kostengründen eine dünne Metalldicke angestrebt wird.

Negative Effekte auf die Oberfläche können dadurch ausgeschlossen werden, dass ein zusätzliches starkes Blech zur Versteifung verwendet wird. Diese Lösung ist kostspielig und aufwändig, da keine Hohlräume o.ä. beim Zusammenfügen der Bleche entstehen dürfen. Ferner ist von Nachteil, dass das Gewicht des Kühlgeräts deutlich erhöht wird.

In der DE-A 199 48 361 wird ein Verfahren zur Fixierung von VIPs an der Innenverkleidung des Gehäuses und der Tür eines Kühlgerätes durch eine Zwischenlage aus einem Wärmeisolationsmaterial beschrieben. Die Zwischenlage kann ein Formteil oder ein nicht näher spezifizierter Wärmeisolationsschaum sein, welcher auf die Innenverkleidung in flüssiger Form aufgetragen wird und in diesem Zustand das VIP darauf aufgesetzt wird. Es wird erwähnt, dass Wärmeisolationsschäume im Allgemeinen auf Basis von Polyurethan sind.

In der EP-A 0 822 379 wird die Fixierung von VIPs an starren Platten durch ein im Kühlmöbelbau gebräuchliches PUR-Hartschaumreaktionsgemisch oder vorzugsweise durch einen PUR-Einkomponentenschaum, z.B. Assil® der Fa. Henkel, beschrieben. Die starre Platte ist z.B. eine Metallplatte oder Kunststoffplatte, vorzugsweise eine Metallkassette. Gemäß einer Ausführungsform kann das Schaumstoff-Reaktionsgemisch zunächst auf die Platte aufgebracht und das VIP in das noch flüssige Reaktionsgemisch eingelegt werden.

PUR-Einkomponentenschäume (z.B. Assil® der Fa. Henkel) haben typischerweise eine freie Rohdichte zwischen 20 - 30 g/l und stellen Isocyanat-Prepolymere dar, die physikalische Treibmittel unter Druck enthalten. Diese Systeme haben den Nachteil, dass sie durch Luftfeuchtigkeit aushärten und dazu mehrere Stunden benötigen. Eine derart lange Aushärtzeit ist aus wirtschaftlichen Überlegungen für eine Kühlschrankproduktion nicht interessant, da hier üblicherweise Taktzeiten von wenigen Minuten realisiert werden.

Übliche im Kühlmöbelbau gebräuchliche PUR-Schaum-Reaktionsgemische weisen im Allgemeinen freigeschäumte Dichten von 25 bis 45 g/l auf. In einem entsprechenden Beispiel (EP-A 0 822 379) wird ein Cyclopentan-haltiges PUR-Schaumreaktionsgemisch aus einem Polyetherpolyol (OH-Zahl 400) und einem polymeren Diphenylmethandiisocyanat eingesetzt. Gemäß dem Beispiel enthält die Formulierung keinen Schaumstabilisator. Von Nachteil ist, dass dadurch die Schaumstruktur nicht erhalten bleibt, sondern der Schaum auf eine Dichte von ca. 60 g/l (bestimmt laut DIN EN ISO 845) kollabiert. Aufgrund der extrem grobzelligen und offenporigen Schaumstruktur erhält man nach Verkleben der VIPs eine Schaum-Oberfläche, die durch große Unebenheiten, sogenannter Lunker, gekennzeichnet ist. Diese Lunker zeichnen sich durch die dünne Metallaußenwand deutlich nach außen ab und vermindern somit die Qualität der Oberfläche.

Um eine gute flächige Verteilung des PUR-Schaumreaktionsgemischs auf einer Gerätewand bzw. unter dem VIP, zu gewährleisten, ist das Reaktionsgemisch in einer bestimmten Mindestflächendichte (g/m²) einzubringen. Bei den herkömmlichen Systemen mit Dichten von 25 bis 45 g/l können ausreichende Flächendichten erst erzielt werden, wenn hohe Verdichtungen (Verdichtung = Dichte des geschäumten Formteils/freie Rohdichte) gefahren werden. Die Verwendung hoher Verdichtungen bedeutet aber, dass geschlossene Formen verwendet werden müssen. In der Praxis müsste dann für jeden Kühlvorrichtungstyp eine andere angepasste geschlossene Form verwendet werden. Dies führt zu hohen Kosten in der Produktion. Zusätzlich sind hohe Verdichtungen, etwa > 3, technisch schwer realisierbar, da Austrieb des gebildeten PUR-Schaumstoffes zum Problem wird.

In der WO 2005/026605 werden Formkörper aus hartem kompakten Polyurethan oder einem Polyurethan-Hartschaumstoff mit kompakter Außenhaut und zelligem Kern (= Polyurethan-Hartintegralschaumstoff) enthaltend mindestens ein Vakuumisolationspaneel beschrieben, welche zur Herstellung von Kühlvorrichtungen verwendet werden. Das VIP wird in eine Form eingebracht, in welche das VIP eingelegt wird, die dann mit dem Reaktionsgemisch für den PUR-Schaum befüllt wird. Die Form wird geschlossen und nach dem Aushärten des PUR-Schaumstoffs wird der Formkörper entnommen. Die Formteile sind selbsttragend, so dass eine Einhausung in Metall- oder Kunststoffgehäuse, wie bei üblichen Kühlbehältern, nicht erforderlich ist. Eine der Seiten des Formkörpers kann aber eine Schicht aus Metall oder Kunststoff sein, wobei diese Schicht mit in die Form eingelegt wird.

Die freigeschäumte Dichte des Polyurethan-Hartintegralschaumstoffs beträgt 200 bis 800 kg/m³; die des harten kompakten Polyurethans liegt im Bereich von 700 bis 1200 kg/m³. Das harte kompakte Polyurethan enthält definitionsgemäß kein Treibmittel in der Rezeptur. Aufgrund der kompakten Außenhaut haben solche Systeme einen höheren Lambda-Wert als PUR-Hartschaumstoffe. Auch kompakte Systeme weisen einen hohen Lambda-Wert auf, der für die Anwendung nachteilig ist.

Ein Verfahren zur Herstellung eines Verbundkörpers aus einem Vakuumisolationspaneel und einer Geräteaußenwand eines Kältegeräts unter Verwendung eines flüssigen PUR-Schaumreaktionsgemisches wird in der DE 10 2008 026 528 A1 beschrieben. Das PUR-Schaumreaktionsgemisch wird als aushärtbare Haftmittelschicht flächig auf die Innenseite der Außenwand einer Kühlvorrichtung und/oder auf die Außenseite einer Wand des Innenbehälters einer Kühlvorrichtung aufgebracht und das VIP darin eingelegt. Das Ausschäumen erfolgt in einer geschlossenen Form bis zur vollständigen Aushärtung des Reaktionsgemischs. Es wird erwähnt, dass das Schaumsystem mit erhöhter Dichte verarbeitet werden kann. Das verwendete PUR-Schaumreaktionsgemisch ist vorzugsweise ein langsam treibendes Schaumsystem, welches lediglich über die Faden- oder Abbindezeit von ca. 3 Minuten charakterisiert wird.

Aufgabe der Erfindung ist es ein verbessertes PUR-Schaumstoff-System zur Fixierung von VIPs in Kühlgeräten bereitzustellen, dass die zuvor genannten Nachteile nicht aufweist und gleichzeitig über eine ausreichende Haftung verfügt. Insbesondere sollte ein System bereitgestellt werden, das auch in einer Zuhaltevorrichtung, z.B. einer Presse eingesetzt werden kann.

Es wurde überraschend festgestellt, dass die Aufgabe gelöst werden kann durch die Verwendung des PUR-Schaumreaktionssystems gemäß Anspruch 1.

### Gegenstand der Erfindung ist die

Verwendung eines Polyurethan (PUR)-Schaumreaktionssystems, enthaltend
a) organische und/oder modifizierte organische Polyisocyanate mit
b) mindestens einer höhermolekularen Verbindung mit mindestens zwei mit Isocyanatgruppen reaktiven Wasserstoffatomen und gegebenenfalls
c) niedermolekulare Kettenverlängerungs- und/oder Vernetzungsmittels in Gegenwart von
d) Treibmitteln,
e) Katalysatoren,
f) Schaumstabilisatoren und gegebenenfalls
g) weiteren Hilfsmitteln und/oder Zusatzstoffen,
wobei die Komponenten a) bis g) so ausgewählt werden, dass ein geschlossenzelliger Polyurethan-Schaumstoff mit einer freigeschäumten Rohdichte von 50 bis 1100 g/l und einer Druckfestigkeit von größer 15 kPa erhalten wird und Hartintegralschäume ausgenommen sind, zur flächigen Fixierung von Vakuumisolationspaneelen (VIPs) auf der Innenseite einer Außenwand einer Kühlvorrichtung und/oder auf der Außenseite einer Wand des Innenbehälters einer Kühlvorrichtung.

Als Außenwand einer Kühlvorrichtung wird auch die Tür einer Kühlvorrichtung (z.B. eines Kühlschranks) und als Wand des Innenbehälters wird auch die Innenverkleidung einer Tür einer Kühlvorrichtung betrachtet.

Die freigeschäumte Rohdichte des erfindungsgemäß eingesetzten Polyurethan-Schaumstoffs wird nach DIN 53420 bestimmt und beträgt vorzugsweise 55 bis 500 g/l, insbesondere 60 bis 200 g/l.

Die Druckfestigkeit des Schaumstoffes wird nach DIN 53421 bestimmt. Bei dem erfindungsgemäß eingesetzten Polyurethan-Schaumstoff handelt es sich danach um einen Halbhartschaum oder einen Hartschaum.

Unter Flächendichte versteht man die eingetragene Masse Material, also die Reaktionsmischung beinhaltend die Komponenten a) bis g), pro Fläche. Die Flächendichte des erfindungsgemäß eingesetzten Polyurethan-Schaumstoffs beträgt 300 bis 9600 g/m², bevorzugt 330 bis 6000 g/m², besonders bevorzugt 360 bis 2400 g/m².

Der erfindungsgemäß eingesetzte Polyurethan-Schaumstoff ist geschlossenzellig (DIN 7726); der Anteil an offenen Zellen beträgt maximal 15%.

Unter einem Polyurethan-Hartintegralschaumstoff wird ein Polyurethan-Hartschaumstoff mit kompakter Außenhaut (weitgehend zellfrei) und zelligem Kern verstanden, d.h. die Randzone weist eine höhere Rohdichte auf als der Kern (DIN 7726).

Polyurethane sind seit langem bekannt und vielfach in der Literatur beschrieben. Ihre Herstellung erfolgt üblicherweise durch Umsetzung von Polyisocyanaten mit Verbindungen mit mindestens zwei mit Isocyanatgruppen reaktiven Wasserstoffatomen in Gegenwart von Treibmitteln, mindestens einem Katalysator und Hilfsmitteln und/oder Zusatzstoffen.

Bei den Verbindungen mit mindestens zwei mit Isocyanatgruppen reaktiven Wasserstoffatomen handelt es sich in den meisten Fällen um mehrfunktionelle Alkohole. Die größte technische Bedeutung haben dabei, neben den Polyesteralkoholen, die Polyetheralkohole.

Die Herstellung der Polyetheralkohole erfolgt dabei zumeist durch Anlagerung von Alkylenoxiden, vorzugsweise Ethylenoxid und/oder Propylenoxid, an mehrfunktionelle Alkohole und/oder Amine. Die Anlagerung erfolgt dabei üblicherweise in Anwesenheit von Katalysatoren.

Alle diese Verfahren sind dem Fachmann bekannt. Eine zusammenfassende Übersicht über die Herstellung von PUR-Schaumstoffen wurde z.B. publiziert in Polyurethane, Kunststoff-Handbuch, Band 7, 1. Auflage 1966, herausgegeben von Dr. R. Vieweg und Dr. A. Höchtlen, und 2. Auflage 1983, herausgegeben von Dr. Günter Oertel, Carl Hanser Verlag München, Wien.

Wie bereits dargelegt wurde, finden zur Herstellung der PUR-Schaumstoffe nach dem erfindungsgemäßen Verfahren die an sich bekannten Aufbaukomponenten Verwendung, zu denen im Einzelnen folgendes auszuführen ist:
a) Als organische Isocyanate können alle gewöhnlichen aliphatischen, cycloaliphatischen und bevorzugt aromatische Di- und/oder Polyisocyanate verwendet werden. Als bevorzugte Isocyanate können Toluoldiisocyanat (TDI) und/oder Diphenylmethandiisocyanat (MDI), vorzugsweise MDI, und besonders bevorzugt Mischungen aus MDI und polymerem Diphenylmethandiisocyanat (PMDI) eingesetzt werden. Diese besonders bevorzugten Isocyanate können ganz oder teilweise mit Uretdion-, Carbamat-, Isocyanurat-, Carbodiimid-, Allophanat- und bevorzugt Urethangruppen modifiziert sein.
   Weiterhin können als Isocyanat-Komponente Prepolymere sowie Mischungen aus den oben beschriebenen Isocyanaten und Prepolymeren eingesetzt werden. Diese Prepolymere werden aus den oben beschriebenen Isocyanaten sowie den weiter unten beschriebenen Polyethern, Polyestern oder beiden hergestellt und weisen einen NCO-Gehalt von üblicherweise 14 bis 32 Gew.-%, bevorzugt 22 bis 30 Gew.-%, auf.
b) Als höhermolekulare Verbindungen mit gegenüber Isocyanaten reaktiven Gruppen können alle Verbindungen eingesetzt werden, die zumindest zwei gegenüber Isocyanaten reaktive Gruppen, wie OH-, SH-, NH- und CH-acide Gruppen aufweisen. Gewöhnlich werden Polyetherole und/oder Polyesterole mit 2 bis 8, vorzugsweise 2 bis 6, mit Isocyanat reaktiven Wasserstoffatomen eingesetzt. Die OH-Zahl dieser Verbindungen liegt üblicherweise im Bereich von 30 bis 850 mg KOH /g, vorzugsweise im Bereich von 100 bis 500 mg KOH/g.

Die Polyetherole werden nach bekannten Verfahren, beispielsweise durch anionische Polymerisation von Alkylenoxiden unter Zusatz mindestens eines Startermoleküls, das 2 bis 8, vorzugsweise 2 bis 6, reaktive Wasserstoffatome gebunden enthält, in Gegenwart von Katalysatoren erhalten. Als Katalysatoren können Alkalihydroxide, wie Natrium- oder Kaliumhydroxid oder Alkalialkoholate, wie Natriummethylat, Natrium- oder Kaliumethylat oder Kaliumisopropylat, oder bei kationischer Polymerisation LewisSäuren, wie Antimonpentachlorid, Bortrifluorid-Etherat oder Bleicherde als Katalysatoren eingesetzt werden. Weiter können als Katalysatoren auch Doppelmetallcyanidverbindungen, sogenannte DMC-Katalysatoren, eingesetzt werden.

Vorzugsweise werden als Alkylenoxide eine oder mehrere Verbindungen mit 2 bis 4 Kohlenstoffatomen im Alkylenrest, wie Ethylenoxid, 1,2-Propylenoxid, Tetrahydrofuran, 1,3-Propylenoxid, 1,2- bzw. 2,3-Butylenoxid, jeweils alleine oder in Form von Mischungen, besonders bevorzugt Ethylenoxid und/oder 1,2-Propylenoxid, eingesetzt.

Als Startermoleküle kommen beispielsweise Ethylenglykol, Diethylenglykol, Glycerin, Trimethylolpropan, Pentaerythrit, Zuckerderivate, wie Saccharose, Hexitderivate, wie Sorbit, sind Methylamin, Ethylamin, Isopropylamin, Butylamin, Benzylamin, Anilin, Toluidin, Toluylendiamin, insbesondere auch vicinales Toluylendiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine in Betracht. Bevorzugt sind Ethylenglykol, Diethylenglykol, Glycerin, Trimethylolpropan, Pentaerythrit, Zuckerderivate, wie Saccharose und Hexitderivate, wie Sorbit.

Die eingesetzten Polyesteralkohole werden zumeist durch Kondensation von mehrfunktionellen Alkoholen mit 2 bis 12 Kohlenstoffatomen, wie Ethylenglykol, Diethylenglykol, Butandiol, Trimethylolpropan, Glycerin oder Pentaerythrit, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure, den Isomeren von Naphthalindicarbonsäuren oder den Anhydriden der genannten Säuren, hergestellt.

Als weitere Ausgangsstoffe bei der Herstellung der Polyester können auch hydrophobe Stoffe mit verwendet werden. Bei den hydrophoben Stoffen handelt es sich um wasserunlösliche Stoffe, die einen unpolaren organischen Rest enthalten sowie über mindestens eine reaktive Gruppe, ausgewählt aus Hydroxyl, Carbonsäure, Carbonsäurester oder Mischungen daraus, verfügen. Das Äquivalentgewicht der hydrophoben Materialen liegt vorzugsweise zwischen 130 und 1000 g/mol. Verwendet werden können zum Beispiel Fettsäuren, wie Stearinsäure, Ölsäure, Palmitinsäure, Laurinsäure oder Linolsäure, sowie Fette und Öle, wie zum Beispiel Rizinusöl, Maisöl, Sonnenblumenöl, Sojabohnenöl, Kokosnussöl, Olivenöl oder Tallöl.

Die eingesetzten Polyesterole haben vorzugsweise eine Funktionalität von 1,5 bis 5, besonders bevorzugt 1,8 bis 3,5.
c) Ferner enthält die Verbindung mit gegenüber Isocyanaten reaktiven Gruppen Kettenverlängerungs- und/oder Vernetzungsmittel. Als Kettenverlängerungs- und/oder Vernetzungsmittel kommen insbesondere zwei- oder dreifunktionelle Amine und Alkohole, insbesondere Diole, Triole oder beide, jeweils mit Molekulargewichten kleiner als 350 g/mol, vorzugsweise von 60 bis 300 g/mol, und insbesondere 60 bis 250 g/mol zum Einsatz. Dabei spricht man bei zweifunktionellen Verbindungen von Kettenverlängerern und bei tri- oder höherfunktionellen Verbindungen von Vernetzern. In Betracht kommen beispielsweise aliphatische, cycloaliphatische und/oder aromatische Diole mit 2 bis 14, vorzugsweise 2 bis 10 Kohlenstoffatomen, wie Ethylenglykol, 1,2-, 1,3-Propandiol, 1,2-, 1,3-Pentandiol, 1,10-Decandiol, 1,2-, 1,3-, 1,4-Dihydroxycyclohexan, Di- und Triethylenglykol, Di- und Tripropylenglykol, 1,4-Butandiol, 1,6-Hexandiol und Bis-(2-hydroxyethyl)-hydrochinon, Triole, wie 1,2,4-, 1,3,5-Trihydroxycyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle.

Werden als Isocyanate (a) Isocyanatprepolymere eingesetzt, wird der Gehalt an Verbindungen mit gegenüber Isocyanaten reaktiven Gruppen (b), inklusive den zur Herstellung der Isocyanatprepolymere eingesetzten Verbindungen mit gegenüber Isocyanaten reaktiven Gruppen (b) berechnet.

Als Treibmittel (d) wird Treibmittel, enthaltend Wasser, eingesetzt. Dabei kann Wasser alleine oder in Kombination mit weiteren Treibmitteln eingesetzt werden. Der Gehalt an Wasser im Treibmittel (d) ist vorzugsweise größer als 40 Gew.-%, besonders bevorzugt größer als 60 Gew.-% und ganz besonders bevorzugt größer als 80 Gew.-%, bezogen auf das Gesamtgewicht des Treibmittels (d). Insbesondere wird Wasser als alleiniges Treibmittel eingesetzt. Werden neben Wasser weitere Treibmittel eingesetzt, können beispielsweise Fluorchlorkohlenwasserstoffe, gesättigte und ungesättigte Fluorkohlenwasserstoffe, Kohlenwasserstoffe, Säuren und/oder flüssiges bzw. gelöstes Kohlendioxid verwendet werden. Ungesättigte Fluorkohlenwasserstoffe werden auch als HFO bezeichnet, abgeleitet von der englischen Bezeichnung Hydrofluoroolefin. In einer weiteren Ausführungsform kann als Treibmittel (d) eine Mischung aus Wasser und Ameisensäure und/oder Kohlendioxid eingesetzt werden. Um das Treibmittel einfacher in der Polyolkomponente dispergieren zu können, kann das Treibmittel (d) mit polaren Verbindungen, wie Dipropylenglykol, vermischt sein.

Der Wassergehalt, bezogen auf das Gesamtgewicht der Komponenten (b) bis (f), beträgt von 0,05 bis 3 Gew.-%, besonders bevorzugt 0,1 bis 2 Gew.-%.

Als Katalysatoren (e) können alle Verbindungen eingesetzt werden, die die Isocyanat-Wasser-Reaktion oder die Isocyanat-Polyol-Reaktion beschleunigen. Solche Verbindungen sind bekannt und beispielsweise im "Kunststoffhandbuch, Band 7, Polyurethane", Carl Hanser Verlag, 3. Auflage 1993, Kapitel 3.4.1 beschrieben. Diese umfassen aminbasierte Katalysatoren und Katalysatoren auf Basis von organischen Metallverbindungen.

Als Katalysatoren auf Basis von organischen Metallverbindungen können beispiels weise organische Zinnverbindungen, wie Zinn-(II)-salze von organischen Carbonsäuren, wie Zinn-(II)-acetat, Zinn-(II)-octoat, Zinn-(II)-ethylhexoat und Zinn-(II)-laurat und die Dialkylzinn-(IV)-salze von organischen Carbonsäuren, wie Dibutylzinndiacetat, Dibutylzinndilaurat, Dibutylzinnmaleat und Dioctylzinndiacetat, sowie Bismutcarboxylate wie Bismut(III)-neodecanoat, Bismut-2-ethylhexanoat und Bismutoctanoat oder Alkali-salze von Carbonsäuren, wie Kaliumacetat oder Kaliumformiat eingesetzt werden.

Vorzugsweise wird als Katalysator (e) eine Mischung, enthaltend zumindest ein tertiäres Amin, eingesetzt. Bei diesen tertiären Aminen handelt es sich gewöhnlich um Verbindungen, die auch gegenüber Isocyanat reaktive Gruppen, wie OH-, NH- oder NH2-Gruppen, tragen können. Einige der am häufigsten eingesetzten Katalysatoren sind Bis(2-Dimethyl-aminoethyl)ether, N,N,N,N,N-Pentamethyldiethylentriamin, N,N,N-Triethylamino-ethoxyethanol, Dimethylcyclohexylamin, Dimethylbenzylamin, Triethylamin, Triethylendiamin, Pentamethyldipropylentriamin, Dimethylethanolamin, N-Methylimidazol, N-Ethylimidazol, Tetramethylhexamethylendiamin, Tris-(Dimethylaminopropyl)hexahydrotriazin, Dimethylaminopropylamin, N-Ethylmorpholin, Diazabicycloundecen und Diazabicyclononen. Vorzugsweise werden als Katalysatoren (e) Mischungen eingesetzt, die zumindest zwei unterschiedliche tertiäre Amine enthalten.

Als Schaumstabilisatoren (f) werden Stoffe bezeichnet, welche die Ausbildung einer regelmäßigen Zellstruktur bei der Schaumbildung fördern. Beispielsweise sind genannt: Siliconhaltige Schaumstabilisatoren, wie Siloxan-Oxalkylen-Mischpolymerisate und andere Organopolysiloxane. Ferner Alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A oder Mischungen aus zwei oder mehreren dieser Schaumstabilisatoren.

Schaumstabilisatoren werden bevorzugt in einer Menge von 0,5 bis 4 Gew.-, besonders bevorzugt 1 bis 3 Gew.-%, bezogen auf das Gesamtgewicht der Komponenten (b) bis (e), verwendet.

Als weitere Additive (g) können Füllstoffe und sonstige Zusatzstoffe, wie Antioxidantien eingesetzt werden.

Als Füllstoffe, insbesondere verstärkend wirkende Füllstoffe, sind die an sich bekannten, üblichen organischen und anorganischen Füllstoffe, Verstärkungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas und andere. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Verwendet werden können auch Glasmikrohohlkugeln. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und Kohlenstofffasern.

Die erfindungsgemäß verwendeten Vakuumisolationspaneelen (VIPs) bestehen in der Regel aus einem wärmeisolierenden Kernmaterial, beispielsweise offenzelligem Polyurethan (PUR)-Hartschaum, offenzelligem extrudiertem Polystyrolschaum, Kieselgelen, Glasfasern, Kunststoffschüttungen, gepresstem Mahlgut aus PUR-Hartschaum bzw. - Halbhartschaum, Perlite, welches in eine gasdichte Folie verpackt, evakuiert und luftdicht eingeschweißt wird. Das Vakuum sollte kleiner 100 mbar sein. Bei diesem Vakuum kann eine Wärmeleitfähigkeit der Paneele je nach Struktur und Porengröße des Kernmaterials von unter 10 mW/mK erreicht werden.

Unter Kühlvorrichtungen werden erfindungsgemäß unter anderem Kühlgerätegehäuse (z.B. von Kühlschränken), Behälter für Kühlfahrzeuge, Kühlboxen, Kühlzellen oder Fernwärmerohre verstanden.

Weiterer Gegenstand der Erfindung ist ein Verfahren zur Herstellung von Verbundkörpern, die eine Wand einer Kühlvorrichtung, eine PUR-Schaumschicht und mindestens ein VIP enthalten. Die Wand der Kühlvorrichtung ist entweder die Innenseite der Außenwand einer Kühlvorrichtung oder die Außenseite einer Wand des Innenbehälters. Als Außenwand einer Kühlvorrichtung wird auch die Tür einer Kühlvorrichtung (z.B. eines Kühlschranks) und als Wand des Innenbehälters wird auch die Innenverkleidung einer Tür einer Kühlvorrichtung betrachtet.

Die Außenwand ist üblicherweise aus Metall, wohingegen die Innenbehälter und -verkleidungen im Allgemeinen und insbesondere bei Kühlschränken aus einem Kunststoffmaterial sind.

Das erfindungsgemäße Verfahren ist gemäß den Ansprüchen definiert.

Mit Hilfe einer Haltevorrichtung, in der der Abstand zwischen unterer Begrenzung und oberer Begrenzung beliebig variiert werden kann, kann eine Schichtdicke des erfindungsgemäß als Fixiermittel verwendeten PUR-Schaums von 2 bis 30 mm eingestellt werden. Die untere Begrenzung der Haltevorrichtung ist eine ebene Fläche.

Gemäß einer bevorzugten Ausführungsform ist die Haltevorrichtung eine Presse. Die obere Begrenzung wirkt in diesem Fall als Gegengewicht. Das Gegengewicht kann dabei definiert verschoben werden, um einen bestimmten Abstand einstellen zu können. Diese bevorzugte Vorrichtung zeichnet sich dadurch aus, dass der Aufbau an den Seiten offen ist.

Die Wand der Kühlvorrichtung wird auf die untere Begrenzung der Haltevorrichtung gelegt. Wahlweise kann zusätzlich ein Formrahmen verwendet werden, der die auszufüllende Fläche auf der Innenseite begrenzt. Dann wird das erfindungsgemäß verwendete flüssige PUR-Reaktionsgemisch (ggf. in den Formrahmen) flächig auf die Wand der Kühlvorrichtung aufgebracht, wobei sich eine Flächendichte von 300 bis 9600 g/m² als vorteilhaft erwiesen hat. Mindestens ein VIP wird auf das noch flüssige Reaktionsgemisch gelegt und die Schichtdicke des PUR-Schaums wird wie oben beschrieben eingestellt. Nach ausreichendem Aushärten des PUR-Schaumreaktionsgemischs wird der nach dem erfindungsgemäßen Verfahren hergestellte Verbundkörper entnommen.

Grundsätzlich kann das VIP die gesamte Fläche bedecken. In diesem Fall spielen Oberflächeneffekte, wie oben beschrieben, keine große Rolle. Wenn das VIP nicht die gesamte Fläche bedeckt, gibt es grundsätzlich zwei Möglichkeiten: 1. Es wird ein Platzhalter mit gleicher Höhe wie das VIP eingelegt, der nach der Fixierung des VIPs mit dem PUR Reaktionsgemisch wieder entfernt wird. 2. Ohne Platzhalter wird der aufsteigende Schaum den verbleibenden Hohlraum ausfüllen, der nicht vom VIP ausgefüllt wird.

Das erfindungsgemäße Verfahren kann mit weiteren Wänden der Kühlvorrichtung wiederholt werden.

Gemäß einer anderen Ausführungsform kann die Herstellung der Verbundkörper auch in einer im Kühlschrankbau üblichen, rundum geschlossenen Form erfolgen. Diese Variante ist bevorzugt, wenn das VIP auf die Außenwand des Innengehäuses der Kühlvorrichtung aufgebracht wird oder auf die Innenverkleidung der Tür der Kühlvorrichtung.

Zur Herstellung von entsprechenden Türen wird in einer geschlossenen Form die Innenverkleidung vorgelegt, das erfindungsgemäß verwendete PU-Schaumreaktionssystem aufgebracht, mindestens ein VIP aufgelegt; die Innenseite einer Metalltür aufgelegt und die Form geschlossen.

Die Fertigstellung der Kühlvorrichtungen kann dadurch erfolgen, dass die erfindungsgemäß hergestellten Verbundkörper aus Metallaußenwand, PUR-Schaumschicht und VIP an einer Innenverkleidung des Gehäuses einer Kühlvorrichtung befestigt werden und der verbleibende Hohlraum der Kühlvorrichtung mit einem konventionellen PUR-Hartschaum, wie er für die Isolierung von Kühlvorrichtungen gebräuchlich ist (z. B. Elastocool^{®} der BASF, WO 2006/037540, freigeschäumte Dichte 25 bis 45 g/I), ausgeschäumt wird.

Alternativ kann die Fertigstellung der Kühlvorrichtungen dadurch erfolgen, dass an der Außenwand eines wie zuvor beschrieben hergestellten Verbundkörpers aus Gehäuse-Innenverkleidung, PUR-Schaumschicht und VIP Metallaußenwände befestigt werden und der verbleibende Hohlraum der Kühlvorrichtung mit einem konventionellen PUR-Hartschaum wie zuvor beschrieben ausgeschäumt wird.

### Beispiele

**Tab. 1: Verwendete Polyole:**

| Polyol | Chemische Zusammensetzung | Hydroxylzahl | Funktionalität |
|---|---|---|---|
| | | mg KOH/g | |
| 1 | Glyzerin-Propylenoxid (PO) | 400 | 3,0 |
| 2 | Saccharose/Pentaerythrit/Diethylenglykol-PO | 400 | 3,9 |
| 3 | Monopropylenglykol-PO | 100 | 2,0 |
| 4 | Saccharose/Glyzerin-PO | 450 | 5,0 |
| 5 | Toluylendiamin (TDA)-Ethylenoxid (EO)/PO | 390 | 3,8 |
| 6 | TDA-EO/PO | 160 | 3,9 |

### Beispiel 1 Herstellung des PUR-Schaumstoffs aus A- und B-Komponente zur Fixierung des VIPs

### A-Komponente:

Mischung aus 22 Gew.-Teilen Polyol 1, 48,65 Gew.-Teilen Polyol 2, 22 Gew.-Teilen Polyol 3 zusammen mit 3 Gew.-Teilen Propylencarbonat, 0,55 Gew.-Teilen Wasser, 1 Gew.-Teil eines Schaumstabilisators (Niax Silicon L6900), 0,7 Gew.-Teilen N,N-Dimethylcyclohexalamin und 1,8 Gew.-Teilen Dimethylbenzylamin

### B-Komponente: Polymeres MDI (Lupranat® M20 der BASF SE)

Der Schaum wurde aus A- und B-Komponente bei einem Mischungsverhältnis von A-Komponente zu B-Komponente von 100 : 88 hergestellt. Die Einsatzstoffe wurden im Handansatz vermischt. Die Abbindezeit betrug 127 s. Man erhielt einen gleichförmigen PUR-Schaumstoff mit einer freigeschäumten Rohdichte von 140 g/L. Das Mischungsverhältnis beschreibt das Masseverhältnis der Komponente A zur Komponente B.

### Bestimmung der Flächendichte

Das Gemisch aus A- und B-Komponente wurde so schnell wie möglich in eine Form folgender Innenabmessungen gegeben: 400mm x 300mm x 10mm. Dabei erfolgte der Eintrag über die gesamte Länge der Form in der Mitte der Form. Anschließend wurde die Form fest verschlossen. Die Schaumprobe wurde nach 10 min entnommen. Die Ergebnisse für die jeweiligen Proben sind in Tabelle 2 zusammengefasst.

### Beispiel 2 Herstellung des PUR-Hartschaumstoffs

### A-Komponente:

Analog Beispiel 1, aber mit 1,8 Gew.-Teilen Wasser, 1,2 Gew.-Teilen N,N-Dimethylcyclohexalamin und 2,0 Gew.-Teilen Dimethylbenzylamin

### B-Komponente: Polymeres MDI (Lupranat® M20 der BASF SE)

Der Schaum wurde aus A- und B-Komponente bei einem Mischungsverhältnis von A-Komponente zu B-Komponente von 100 : 105 hergestellt. Die Einsatzstoffe wurden im Handansatz vermischt. Die Abbindezeit betrug 90s.

Man erhielt einen gleichförmigen PUR-Schaumstoff mit einer freigeschäumten Rohdichte von 55 g/l. Die Bestimmung der Flächendichte erfolgte analog zu Beispiel 1.

### Beispiel 3 (Vergleichsbeispiel analog zu EP 0822379) Herstellung des PUR-Hartschaumstoffs

### A-Komponente:

Mischung aus 100 Gew.-Teilen Polyol 4 zusammen mit 2 Gew.-Teilen Wasser, 10 Gew.-Teilen Cyclopentan 95 und 2,0 Gew.-Teilen N,N-Dimethylcyclohexylamin

### B-Komponente: Polymeres MDI (Lupranat® M20 der BASF SE)

Der Schaum wurde analog zum Patent EP 0 822 379 derart hergestellt, dass 100 Gew.-Teile Polyol 4 (A-Komponente) mit 100 Gew.-Teilen B-Komponente reagieren. Die Einsatzstoffe wurden im Handansatz vermischt. Die Abbindezeit betrug 90s.

Man erhielt einen ungleichförmigen PUR-Hartschaumstoff mit deutlich unterschiedlich großen Zellen und einer freigeschäumten Rohdichte von 63 g/L (bestimmt nach DIN EN ISO845). Der Schaum hat eine Offenzelligkeit von 67 % (bestimmt nach DIN ISO 4590) und eine sehr schlechte von großen Lunkern gekennzeichnete Oberfläche. Die Bestimmung der Flächendichte erfolgte analog zu Beispiel 1.

**Tabelle 2: Zusammenfassung der Ergebnisse**

| Beispiel | Freigeschäumte Rohdichte | Verdichtung | Durchschnittliche Formteildichte | Flächendichte |
|---|---|---|---|---|
| | g/L | | g/L | g/m² |
| 1 | 140 | 1,3 | 179 | 1867 |
| 2 | 55 | 1,5 | 82 | 883 |
| 3 | 63 | Nicht bestimmbar* | Nicht bestimmbar* | Nicht bestimmbar* |

| | | | | |
|---|---|---|---|---|
| * Bestimmung nicht möglich, aufgrund des Schaumkollaps des PUR-Schaums, wodurch eine vollständige Ausfüllung des auszufüllenden Volumens nicht möglich war, unabhängig von der Verdichtung, d.h. auch bei Verdichtungen > 2,5. | | | | |

Versuchsaufbau zur erfindungsgemäßen Herstellung von Verbundkörpern, die VIPs enthalten

Es wurden Verbundkörper hergestellt, die aus einer metallischen Außenwand einer Kühlvorrichtung, einer PUR-Schaumschicht gemäß den Beispielen 1 bis 3 und VIP bestehen. Zur Herstellung der Verbundkörper wurde eine offene Presse verwendet, in der der Abstand zwischen unterer Begrenzung (ebene Fläche) und oberer Begrenzung (Gegengewicht) beliebig variiert werden kann.

Die Metallaußenwand einer Kühlvorrichtung wurde auf die untere Begrenzung der Presse gelegt. Auf deren Innenseite wurde das flüssige PUR-Schaumreaktionsgemisch gemäß den Beispielen 1 bis 3 als Fixiermittel gleichmäßig flächig aufgebracht. Ein Silica-VIP der Firma va-Q-tec (Abmessungen: 800x430x15 mm) wurde auf das noch flüssige Reaktionsgemisch gelegt und die Schichtdicke des PUR-Schaums wurde mit der oberen Begrenzung der Vorrichtung auf 5 mm eingestellt. Nach Aushärten des PUR-Schaumreaktionsgemischs wurde der Verbundkörper aus Metallaußenwand, PUR-Schaumschicht und VIP entnommen.

Der Vorgang wurde für die zweite Außenseite und des Kühlgeräts wiederholt. Dann wurden die so hergestellten Verbundkörper als Seitenwände und eine konventionelle Rückwand zum Aufbau eines Kühlschrankgehäuses an einem Polystyrol-Innengehäuse befestigt und der dann verbleibende Hohlraum des Kühlschranks wurde mit Elastocool^{®} ausgeschäumt. Nach der Herstellung der Geräte wurden diese einige Tage gelagert und anschließend bewertet.

Es zeigte sich, dass sich bei Verwendung von PUR-Schaumreaktionsgemischen gemäß Beispiel 1 und 2 nach dem erfindungsgemäßen Verfahren Verbundkörper herstellen lassen, die stabil sind und keine oder optisch kaum wahrnehmbare Verformungen oder sonstige Beeinträchtigungen der Kühlgeräteaußenwände bewirken.

Bei Verwendung des PUR Reaktionssystems gemäß Beispiel 3 kam es zu starkem Austrieb des Schaums an den Seiten der Presse. Dadurch konnten die Verbundkörper nicht zum Aufbau eines Kühlschrankgehäuses verwendet werden. Bei Verwendung einer geschlossenen Form konnte der Austrieb verhindert werden. Allerdings waren hohe Verdichtungen, d.h. > 1.8, notwendig, um eine vollständige Füllung der Fläche unter dem VIP zu erreichen.

## Patentansprüche

1. Verwendung eines Polyurethan (PUR)-Schaumreaktionssystems, enthaltend
a) organische und/oder modifizierte organische Polyisocyanate mit
b) mindestens einer höhermolekularen Verbindung mit mindestens zwei mit Isocyanatgruppen reaktiven Wasserstoffatomen und gegebenenfalls
c) niedermolekulare Kettenverlängerungs- und/oder Vernetzungsmittels in Gegenwart von
d) Treibmitteln,
e) Katalysatoren,
f) Schaumstabilisatoren und gegebenenfalls
g) weiteren Hilfsmitteln und/oder Zusatzstoffen,
wobei die Komponenten a) bis g) so ausgewählt werden, dass ein geschlossenzelliger Polyurethan-Schaumstoff mit einer freigeschäumten Rohdichte von 50 bis 1100 g/l und einer Druckfestigkeit von größer 15 kPa gemäß DIN 53421 erhalten wird und Hartintegralschäume ausgenommen sind,
zur flächigen Fixierung von Vakuumisolationspaneelen (VIPs) auf der Innenseite einer Außenwand einer Kühlvorrichtung und/oder auf der Außenseite einer Wand des Innenbehälters einer Kühlvorrichtung.

2. Verwendung nach Anspruch 1, **dadurch gekennzeichnet, dass** Wasser als alleiniges Treibmittel d) eingesetzt wird.

3. Verwendung nach Anspruch 2, **dadurch gekennzeichnet, dass** der Wassergehalt, bezogen auf die Komponenten b) bis g) 0,05 bis 3 Gew.-% beträgt.

4. Verwendung nach einem der Ansprüche 1 bis 3, **dadurch gekennzeichnet, dass** die freigeschäumte Rohdichte des Polyurethan-Schaumstoffs 55 bis 500 g/l beträgt.

5. Verwendung nach einem der Ansprüche 1 bis 4, **dadurch gekennzeichnet, dass** die freigeschäumte Rohdichte des Polyurethan-Schaumstoffs 60 bis 200 g/l beträgt.

6. Verfahren zur Herstellung von Verbundkörpern, die eine Wand einer Kühlvorrichtung, eine PU-Schaumschicht und mindestens ein VIP enthalten, umfassend die folgenden Schritte:
1) Auflegen einer Außenwand oder einer Wand des Innenbehälters einer Kühlvorrichtung auf die untere ebene Begrenzung einer Haltevorrichtung, in der der Abstand zwischen unterer Begrenzung und oberer Begrenzung variiert werden kann,
2) flächiges oder teilflächiges Aufbringen eines flüssigen PU-Schaumreaktionssystems, enthaltend
a) organische und/oder modifizierte organische Polyisocyanate mit
b) mindestens einer höhermolekularen Verbindung mit mindestens zwei mit Isocyanatgruppen reaktiven Wasserstoffatomen und gegebenenfalls
c) niedermolekulare Kettenverlängerungs- und/oder Vernetzungsmittel, in Gegenwart von
d) Treibmitteln
e) Katalysatoren,
f) Schaumstabilisatoren und gegebenenfalls
g) weiteren Hilfsmitteln und/oder Zusatzstoffen,
wobei die Komponenten a) bis g) so ausgewählt werden, dass ein Polyurethan-Schaumstoff mit einer freigeschäumten Dichte von 50 bis 1100 g/l und einer Druckfestigkeit von größer 15 kPa gemäß DIN 53421 erhalten wird und Hartintegralschäume ausgenommen sind;
auf die Innenseite der Außenwand der Kühlvorrichtung oder die Außenseite einer Wand des Innenbehälters der Kühlvorrichtung in einer Flächendichte von 300 - 9600 g/m²;
3) Auflegen mindestens eines Vakuumisolationspaneels (VIP) auf das flüssige PU-Schaumreaktionsgemisch,
4) Schließen der Haltevorrichtung, und
5) Entnahme des Verbundkörpers aus der Haltervorrichtung nach ausreichendem Aushärten des PU-Schaumreaktionsgemischs.

7. Verfahren gemäß Anspruch 6, **dadurch gekennzeichnet, dass** die Haltevorrichtung eine Presse ist.

8. Verfahren gemäß Anspruch 6 oder 7, **dadurch gekennzeichnet, dass** Wasser als alleiniges Treibmittel d) eingesetzt wird.

9. Verfahren gemäß Anspruch 8, **dadurch gekennzeichnet, dass** der Wassergehalt, bezogen auf die Komponenten b) bis g) 0,05 bis 3 Gew.-% beträgt.

10. Verfahren nach einem der Ansprüche 6 bis 9, **dadurch gekennzeichnet, dass** die freigeschäumte Rohdichte des Polyurethan-Schaumstoffs 55 bis 500 g/l beträgt.

11. Verfahren nach einem der Ansprüche 6 bis 10, **dadurch gekennzeichnet, dass** die freigeschäumte Rohdichte des Polyurethan-Schaumstoffs 60 bis 200 g/l beträgt.

## Claims

1. The use of a polyurethane (PUR) foam reaction system comprising
a) organic and/or modified organic polyisocyanates together with
b) at least one relatively high molecular weight compound having at least two hydrogen atoms which are reactive toward isocyanate groups and optionally
c) low molecular weight chain extenders and/or crosslinkers in the presence of
d) blowing agents,
e) catalysts,
f) foam stabilizers and optionally
g) further auxiliaries and/or additives,
where the components a) to g) are selected so that a closed-cell polyurethane foam having a free-foamed density of from 50 to 1100 g/l and a compressive strength of greater than 15 kPa in accordance with DIN 53421 is obtained and rigid integral foams are excluded,
for the fixing over an area of vacuum insulation panels (VIPs) on the inside of an outer wall of a cooling apparatus and/or on the outside of a wall of the inner container of a cooling apparatus.

2. The use according to claim 1, wherein water is used as sole blowing agent d).

3. The use according to claim 2, wherein the water content, based on the components b) to g), is from 0.05 to 3% by weight.

4. The use according to any of claims 1 to 3, wherein the free-foamed density of the polyurethane foam is from 55 to 500 g/l.

5. The use according to any of claims 1 to 4, wherein the free-foamed density of the polyurethane foam is from 60 to 200 g/l.

6. A process for producing composites comprising a wall of a cooling apparatus, a PU foam layer and at least one VIP, which comprises the following steps:
1) laying of an outer wall or a wall of the inner container of a cooling apparatus on the lower flat boundary of a holding device in which the distance between lower boundary and upper boundary can be varied,
2) application of a liquid PU foam reaction system comprising
a) organic and/or modified organic polyisocyanates together with
b) at least one relatively high molecular weight compound having at least two hydrogen atoms which are reactive toward isocyanate groups and optionally
c) low molecular weight chain extenders and/or crosslinkers in the presence of
d) blowing agents,
e) catalysts,
f) foam stabilizers and optionally
g) further auxiliaries and/or additives,
where the components a) to g) are selected so that a polyurethane foam having a free-foamed density of from 50 to 1100 g/l and a compressive strength of greater than 15 kPa in accordance with DIN 53421 is obtained and rigid integral foams are excluded;
over all or part of the area of the inside of the outer wall of the cooling apparatus or the outside of a wall of the inner container of the cooling apparatus in a weight per unit area of 300-9600 g/m²;
3) laying of at least one vacuum insulation panel (VIP) on the liquid PU foam reaction mixture,
4) closing of the holding device and
5) removal of the composite from the holding device after sufficient curing of the PU foam reaction mixture.

7. The process according to claim 6, wherein the holding device is a press.

8. The process according to claim 6 or 7, wherein water is used as sole blowing agent d).

9. The process according to claim 8, wherein the water content, based on the components b) to g), is from 0.05 to 3% by weight.

10. The process according to any of claims 6 to 9, wherein the free-foamed density of the polyurethane foam is from 55 to 500 g/l.

11. The process according to any of claims 6 to 10, wherein the free-foamed density of the polyurethane foam is from 60 to 200 g/l.

## Revendications

1. Utilisation d'un système réactionnel de mousse de polyuréthane (PUR) contenant
a) des polyisocyanates organiques et/ou organiques modifiés avec
b) au moins un composé de poids moléculaire élevé contenant au moins deux atomes d'hydrogène réactifs avec les groupes isocyanate et éventuellement
c) des agents d'allongement de chaîne et/ou de réticulation de poids moléculaire faible, en présence de
d) des agents gonflants,
e) des catalyseurs,
f) des stabilisateurs de mousse et éventuellement
g) des adjuvants et/ou additifs supplémentaires,
les composants a) à g) étant choisis de manière à obtenir une mousse de polyuréthane à cellules fermées ayant une densité apparente moussée librement de 50 à 1 100 g/l et une résistance à la pression supérieure à 15 kPa selon DIN 53421, et à exclure les mousses intégrales dures,
pour la fixation sur l'ensemble de la surface de panneaux d'isolation sous vide (VIP) sur le côté intérieur d'une paroi extérieure d'un système de réfrigération et/ou sur le côté extérieur d'une paroi du contenant intérieur d'un système de réfrigération.

2. Utilisation selon la revendication 1, **caractérisée en ce que** l'eau est utilisée en tant qu'agent gonflant d) unique.

3. Utilisation selon la revendication 2, **caractérisée en ce que** la teneur en eau, par rapport aux composants b) à g), est de 0,05 à 3 % en poids.

4. Utilisation selon l'une quelconque des revendications 1 à 3, **caractérisée en ce que** la densité apparente moussée librement de la mousse de polyuréthane est de 55 à 500 g/l.

5. Utilisation selon l'une quelconque des revendications 1 à 4, **caractérisée en ce que** la densité apparente moussée librement de la mousse de polyuréthane est de 60 à 200 g/l.

6. Procédé de fabrication de corps composites, qui contiennent une paroi d'un système de réfrigération, une couche de mousse de PU et au moins un VIP, comprenant les étapes suivantes :
1) la disposition d'une paroi extérieure ou d'une paroi du contenant intérieur d'un système de réfrigération sur la limite plane inférieure d'un dispositif support dans lequel la distance entre la limite inférieure et la limite supérieure peut être variée,
2) l'application sur l'ensemble de la surface ou sur une partie de la surface d'un système réactionnel de mousse de PU liquide, contenant
a) des polyisocyanates organiques et/ou organiques modifiés avec
b) au moins un composé de poids moléculaire élevé contenant au moins deux atomes d'hydrogène réactifs avec les groupes isocyanate et éventuellement
c) des agents d'allongement de chaîne et/ou de réticulation de poids moléculaire faible, en présence de
d) des agents gonflants,
e) des catalyseurs,
f) des stabilisateurs de mousse et éventuellement
g) des adjuvants et/ou additifs supplémentaires,
les composants a) à g) étant choisis de manière à obtenir une mousse de polyuréthane ayant une densité moussée librement de 50 à 1 100 g/l et une résistance à la pression supérieure à 15 kPa selon DIN 53421, et à exclure les mousses intégrales dures ;
sur le côté intérieur de la paroi extérieure du système de réfrigération ou le côté extérieur d'une paroi du contenant intérieur du système de réfrigération en une densité surfacique de 300 à 9 600 g/m² ;
3) la disposition d'au moins un panneau d'isolation sous vide (VIP) sur le mélange réactionnel de mousse de PU liquide,
4) la fermeture du dispositif support et
5) l'extraction du corps composite du dispositif support après un durcissement suffisant du mélange réactionnel de mousse de PU.

7. Procédé selon la revendication 6, **caractérisé en ce que** le dispositif support est une presse.

8. Procédé selon la revendication 6 ou 7, **caractérisé en ce que** l'eau est utilisée en tant qu'agent gonflant d) unique.

9. Procédé selon la revendication 8, **caractérisé en ce que** la teneur en eau, par rapport aux composants b) à g), est de 0,05 à 3 % en poids.

10. Procédé selon l'une quelconque des revendications 6 à 9, **caractérisée en ce que** la densité apparente moussée librement de la mousse de polyuréthane est de 55 à 500 g/l.

11. Procédé selon l'une quelconque des revendications 6 à 10, **caractérisée en ce que** la densité apparente moussée librement de la mousse de polyuréthane est de 60 à 200 g/l.
